# EUROPEAN PATENT APPLICATION

(11) **EP 1 306 784 A1**
(43) Date of publication of application: **02.05.2003**
(21) Application number: 01947830.4
(22) Date of filing: 04.07.2001
(51) Int. Cl.: G06F 17/60, G07B 15/00

(54) **INFORMATION RECORDED MEDIUM AND SYSTEM USING THE SAME**

(30) Priority: 04.07.2000 JP 2000201693; 04.07.2000 JP 2000201694
(71) Applicant: Sony Corporation, Tokyo 141-0001 (JP)
(72) Inventor: OHSAWA, Tomoyuki, c/o SONY URBAN ENTERTAINMENT INC, Tokyo 135-8701 (JP); KURISHIMA, Kazuyuki, c/o SONY URBAN ENT. Inc., Tokyo 135-8701 (JP); YABUSAKI, Masami, c/o SONY URBAN ENTERTAINMENT INC, Tokyo 135-8701 (JP)
(74) Representative: Horner, David Richard
(86) International application number: JP0105820
(87) International publication number: WO02003281

(57) **Abstract**

The present invention provides an information recording medium which can be used commonly in plural services so that a variety of reservations, a simplified examination process at the time of entrance and exit, and a simplified settlement of accounts, etc., and a utilizing system of the same. The information recording medium at least comprises information relating to the settlement of accounts, identification information of the information recording medium, reservation information indicating that a specified resource is occupied for a specified time period previously, and information on services to be settled. The utilizing system ofthe information recording medium makes use of the information recording medium to be used in multiple ways commonly in the plural services including the reservation based on the reservation information.

## Description

### Technical Field

The present invention relates to an information recording medium and a utilizing system of the same, and more specifically relates to an information recording medium which can be used commonly at attractions or restaurants scattered in an unspecified area, and a utilizing system of the information recording medium.

### Background Art

Recently, an event site where movie theaters, amusement centers, restaurants, etc, are assembled (complex commercial facility) is often constructed. Such event sites adopt a system in which the space is partitioned into plural parts, visitors purchase admission tickets before admission for each movie theater, attraction or the like and have the tickets examined at the entrance to pass it. Also, in a case where the movie theaters are scattered in plural places, and a visitor desires to watch each movie one after another, a system in which the visitor purchases each ticket and has the ticket checked by a person in charge at each entrance is adopted. Similarly, in a case where a visitor desires to use a movie theater, a restaurant, and a shop, a system in which the visitor is charged at each place.

On the other hand, when an event takes place, an automation of the admission control is normally attempted at the event site in order that only the persons who complete a reservation process can attend the event as a general rule. As an example of the automation, it is thought from the recent technical tendency that a server performs all processes, and a user merely possesses a card which records an ID that identifies himself or herself, has the card read in a gate device at the time of the admission, and acquires the permission/rejection information from the server for gate operation.

In this way, it is conventionally proposed that an information recording medium such as a magnetic card or an IC card is used for the settlement of accounts and opening/closing of a gate, etc.

In the conventional information recording media, a magnetic card has a limitation in memory capacity, and an IC card has a limitation in use range as it mainly records information relating to the settlement of accounts and identification information. That is, since a utilizing system of these media can be used only for the settlement of accounts, or for specific services, such a system can not provide a user with enough utility because the number of cards that the user must carry with him or her is undesirably increased, and another function such as addition of points can not be put together.

Also, in a system where a server performs all processes, a communication with the server must be performed at a gate every time, and it takes considerable time for a process of permission/rejection for gate admission per a person, which thus may bring about admission jam at the gate.

### Disclosure of the Invention

It is a feature of the present invention to provide the following technical means in order to solve the above-mentioned problems.

The present invention is proposed by giving attention to a fact that a process of admission for an event must be extremely rapid as the visitors get together at a time, while a reservation process is performed for a comparatively long time at different timing and places. As the process of admission for the event can be completed locally, and the reservation process needs some time due to a communication with a server but provides easy management, and further usage information is recorded together in a recording medium, all of the processes regarding the event, etc. can be performed with a user's utility being retained and with the minimum amount of communications.

In other words, the present invention is meaningful in that a main control device, a reservation device, and a gate device are organically connected and function via a recording medium, and the whole process from a reservation in the reservation device toward admission reservation information managed at the main control device to an examination operation of admission permission or admission rejection to a specified area (reserved facility, etc.) examined at the gate device referring to reservation content information is simplified and sped up. That is, the present invention gives attention to an aspect in which a general user just requests a reservation by using the reservation device to be relieved from a conventional troublesome examination process and so on, and in which a service provider can reduce the number of persons in charge for reservation and examination and obtain advantages due to the speedy processes for reservation and examination. The present invention has been expected to make a greater effect by making a recording medium enable to record the respective reservation content information in accordance with respective scattered areas when the areas where each specified resource is usable are scattered in plural places, and admission reservation information is managed per each of the scattered areas.

An information recording medium according to the present invention is one for recording information relating to the settlement of accounts, and at least records identification information of the information recording medium, reservation information indicating that a specified resource is occupied for a specified time period previously, and information on services to be settled.

In a utilizing system of an information recording medium according to the present invention, a terminal device used for the information recording medium according to the present invention is connected to a main control device via a network, and the main control device manages the terminal device, such that the information recording medium can be used variously for plural services including a reservation using reservation information by the terminal device.

The above-mentioned information recording medium at least records identification information, usage information including rewritable information relating to the settlement of accounts, and reservation information, and is aimed to have many functions such as an IC card so that it can be used commonly for a variety of services.

The reservation information is exemplified by information indicating a reservation of an airplane or a train and information indicating that admission to various attraction places or movie theaters is allowed. Also, the reservation device is not limited to one only for reservations, but includes a ticket issue and reservation device. Meanwhile, in the following description, admission reservation information indicating that a specified resource is occupied for a specified time period is reservation information on a specified service provided only for the limited number for a limited time period such as a ticket for a movie, etc. or a reserved ticket for a vehicle or the like. Also, "a specified time period" may be time between a predetermined time and a predetermined time or time including a specified condition.

The information relating to the settlement of accounts is e.g., information on balance after depositing money or on charging, and the identification information is e.g., information for identifying a person who possesses an information recording medium. The usage information is information on the date when a service is used and the amount of money used when the service is used regarding the service to be settled, as well as information relating to the settlement of accounts. In the present description, as "recording", "memory", and "storage" are not distinguished severely, "recording" may be replaced by "memory" or "storage" when it is needed.

The present invention also provides a utilizing system of the above-mentioned information recording medium. In the system, as the information recording medium records reservation information and usage information to be used, the information recording medium can be used variously for plural services such as various attractions, amusement centers, restaurants, shops and so on including a service for which a reservation is required. Thus, in the system, it is possible to provide users with the use's utility, simplification of the settlement of accounts, and careful services. The utilizing system of an information recording medium according to the present invention at least comprises a terminal device inputting/outputting information to/from a reservation information recording area and a usage information recording area comprised in the information recording medium, a main control device managing the reservation information indicating whether or not the specified resource and the specified time period are occupied for, and a gate device enabling to acquire the reservation content information recorded in the information recording medium and performing opening/closing operations based on the reservation information. The terminal device and the main control device are connected respectively to a network.

In another aspect of the present invention, as the above-mentioned system according to the present invention has a terminal device for balance inquiry and re-depositing in which the information recording medium can be used, and a POS (Point of Sales) terminal device in which the information recording medium can be used, the user's utility can be provided in terms of depositing and an operation for the settlement of accounts, respectively.

Such terminal devices may be a terminal device for a general client operable by connecting to the main control device via the Internet. It is noted that the terminal device for a general client needs to include a reading/writing means which can write information on a recording medium according to the present invention. This can be applied to the following inventions.

In still another aspect of the present invention, as the above-mentioned system according to the present invention has a terminal device for reservations which requests a reservation toward admission reservation information managed at the main control device, acquires reservation permission/rejection information corresponding to the request of the reservation from the main control device, and can record reservation content information indicating the content of the reservation as reservation information in an information recording medium when the reservation is permitted, the user's utility can be provided in terms of the user's reservation process. The admission reservation information is exemplified by a reservation ticket or the like for an airplane or a train and an admission ticket or the like for various attraction places or movie theaters. The reservation content information is corresponded to the admission reservation information.

Meanwhile, the terminal device for reservations is not limited to one only for reservations, but includes a ticket issue and reservation device. This terminal device for reservations may be a terminal device for a general client operable by connecting to the main control device via the Internet. It is noted that the terminal device for a general client needs to include a reading/writing means which can write information on an information recording medium according to the present invention.

In yet another aspect of the present invention, as the system includes a gate device which acquires reservation content information from an information recording medium, and performs permission for entering an area in which a specified resource is usable based on the reservation content information, the user who carries the information recording medium with him or her is checked at the entrance gate whether or not he or she is a valid specified person who has made a reservation such that the examination process and so on can be performed accurately and promptly. This gate terminal is not limited to a terminal only for admission, but includes a gate terminal for admission/exit.

Other objects and advantages of the present invention will become apparent from the following description of the preferred embodiments and the claims.

### Brief Description of the Drawings

Fig. 1 is a block diagram showing a schematic configuration of a system of using an information recording medium according to the present invention.
Fig. 2 is a schematic view showing a subsidiary memory in the information recording medium according to the present invention.
Fig. 3 is a schematic view showing an example of arranging hardware, etc. in a case of implementing the system of using an information recording medium according to the present invention in a complex commercial facility.
Fig. 4 is a block diagram showing a structure of a ticket issue/reservation terminal shown in Fig. 1.
Fig. 5 is a block diagram showing a structure of an entrance/exit gate terminal shown in Fig. 1.

### Best Mode for Carrying Out the Invention

Preferred embodiments of the present invention will now be described with reference to the drawings. In the following description, an embodiment of an information recording medium according to the present invention is explained first, and after that, a utilizing system of the same is explained.

### (About information recording medium)

Although the information recording medium according to the present invention is not limited in its sort, a non-contact type IC card 41, etc. is exemplified in the description as a preferred embodiment.

This IC card 41 comprises a memory for a subsidiary side 42 for recording various information and a transmission/reception means 43 for transmitting and receiving data to and from outside in response to an external command preferably in a non-contact manner, and is constituted so that the user can carry it with him or her.

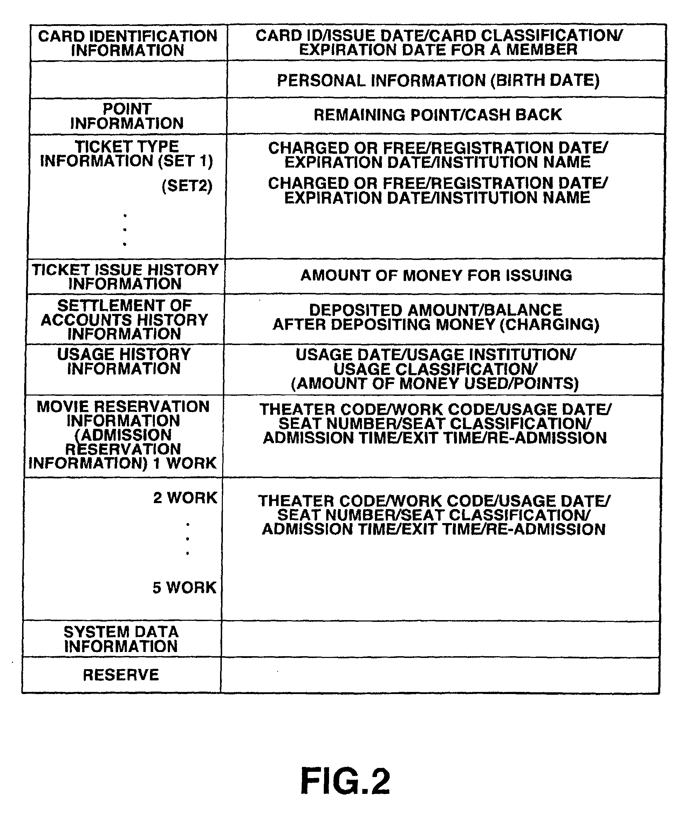

Fig. 2 shows an example of a layout of data stored in the memory for a subsidiary side 42 of the IC card 41 selected from IC card layouts to be actually used. The memory for a subsidiary side 42 can record card identification information, point information, ticket type information, ticket issue history information, settlement of accounts history information, usage history information, movie reservation information, system data information and so on. When the card is to be sold to the users, it is preferable to record at least the card identification information and a deposited balance as the settlement of accounts history information in the card.

In the card identification information are preferably included an issue date/card classification/expiration date for a member/personal information such as the member's birth date as well as a card ID. These are useful when various kinds of statistics are compiled based on the cards in the future. For example, in a case where a statistics is to be compiled regarding what kind of users have attended a sales promotion campaign when the sales promotion campaign week has been carried out, information can be read out from the cards, and thus the process can be completed without doing collective management in a server. In the point information is preferably included information on remaining points/cash back, etc.

The ticket type information as a part of the reservation information has at least one set, and may preferably include information on charged or free/registration date/expiration date/institution name. The number of sets differs depending on the scale of a service in which the card is used, but the appropriate number may be 1 to 8 when the card is used in one event site.

The ticket issue history information preferably includes at least information on the amount of money for issuing. The settlement of accounts history information at least as a part of the usage information includes information on the deposited amount/balance after depositing money and charging information.

The usage history information as a part of the usage information includes usage date/usage institution/usage classification (amount of money used/points). The movie reservation information has at least a data group for a work as a set, each of which can include information on theater code/work code/usage date/seat number/seat classification/admission time/exit time/re-admission, and so on. When the card is used in plural movie theaters, the number of the set may be preferably 1 to 5.

This movie reservation information records different information depending on the content in case of attractions or reservation information for airplanes other than the movie.

These information can be rewritten so that the IC card 41 can be used a number of times. As for the movie reservation information, 5 pieces of works can be reserved in one IC card 41, for example. Meanwhile, although there is a case in which the user may reserve 5 movie theaters A to E individually, or in which the user reserve different works at different times in one movie theater, it is defined in this description that one reservation corresponds to one work.

In the movie reservation information, the above-mentioned information on theater code/work code/usage date/seat number/seat classification/admission time/exit time/re-admission, and so on are recorded for one work. Also, the IC card 41 can be used not only for reservations of movies but also in a shop 17 or a restaurant 16 in the event site or managed by a subsidiary company or the like. Every time the user uses the IC card 41, the amount consumed by the use is subtracted or added in terms of the point information, the ticket issue history information, the settlement of accounts history information, and the usage history information. Thus, the IC card 41 itself functions as a point card or a debit card or the like from the user's point of view since the amount of money that the specified person who possesses the IC card 41 has consumed is calculated, the amount is subtracted from the amount of money described in the IC card 41, and the balance is recorded in the IC card 41.

### (An example of a service to which the IC card is applied)

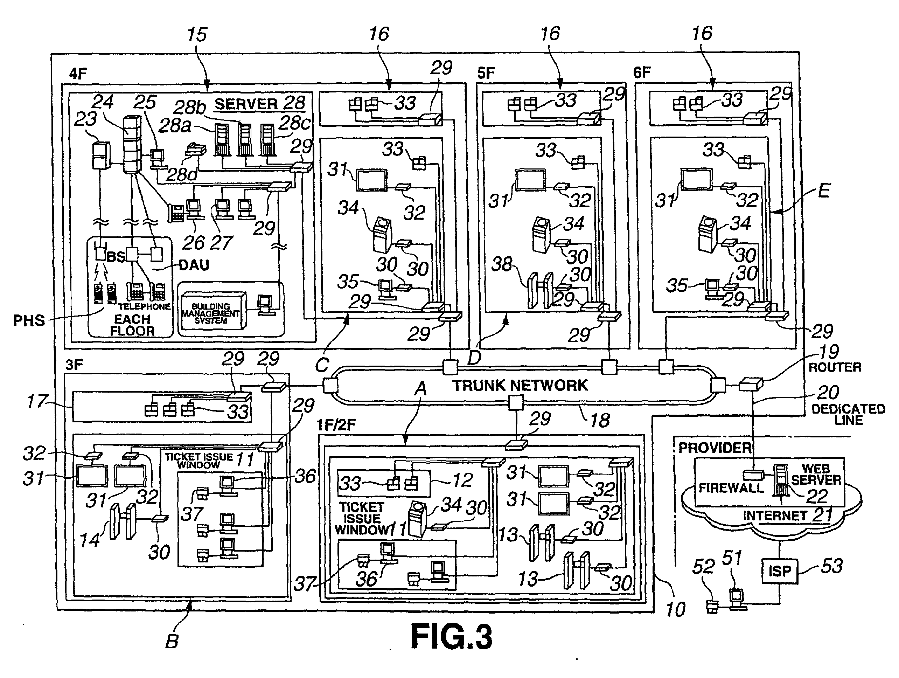

Fig. 3 is a sketch of an event site (complex commercial facility) and an example of a configuration of hardware as an example to which the above IC card 41 has been applied.

In Fig. 3, the even site uses from a first floor to a sixth floor of a building 10 and has 5 movie theaters, that is, a movie theater A on the first and second floor unified by an open ceiling and movie theaters B, C, D, and E respectively installed at the third, fourth, fifth, and sixth floors.

At a lobby at the first and second floor is provided a ticket issue window 11 and a ticket issue machine 12. Entrance gates 13, 38 to the event site are provided on the first, second, and fifth floor, and an exit gate 14 is provided on the third floor, respectively. A main operation room 15 including a building management system and a restaurant 16 are provided on the fourth floor, a selling space 17 is provided on the third floor, and restaurants 16 are respectively provided on the fifth and sixth floor. A variety of electronic equipments are installed on each floor, and are connected to a server 28 in the operation room 15 via a trunk network 18. These layouts are shown schematically and exemplified, and may be changed arbitrarily depending on the content of an event.

The trunk network 18 is connected to a Web server 22 of the Internet 21 via a router 19, a dedicated line 20, and a provider so as to be connected to a general client terminal 51 via a website created in the Web server 22 ofthe Internet 21. On the other hand, the general client terminal 51 can access to the website in the Web server 22 via an ISP (Internet Service Provider) 53 so that the user can make a reservation by using an IC card reading/writing terminal 52 connected to the general client terminal 51 and write reservation content information described later on the IC card 41.

The reference number 23 represents a PHS exchange, and the reference number 24 represents a PBX (private brunch exchange). They control telephone lines at each floor. The reference number 25 represents a charging device for the telephone lines, the reference number 26 represents a terminal for a call center, the reference number 27 represents a terminal for official work, and the reference number 28 represents a server as a main control device. The reference number 29 represents a switching hub, the reference number 30 represents a terminal server, the reference number 31 represents a large-size information display unit, the reference number 32 represents a control device for the information display unit, the reference number 33 represents a POS (Point of Sales) terminal, the reference number 34 represents a balance inquiry/re-depositing device as a terminal for balance inquiry and re-depositing, the reference number 35 represents an entrance gate terminal, the reference number 36 represents a ticket issue/reservation terminal (an abbreviation of a terminal for ticket issue and reservation), and the reference number 37 represents a terminal for IC card reading/writing. The above structure is a schematic structure of the event site.

### (A utilizing system of an information recording medium)

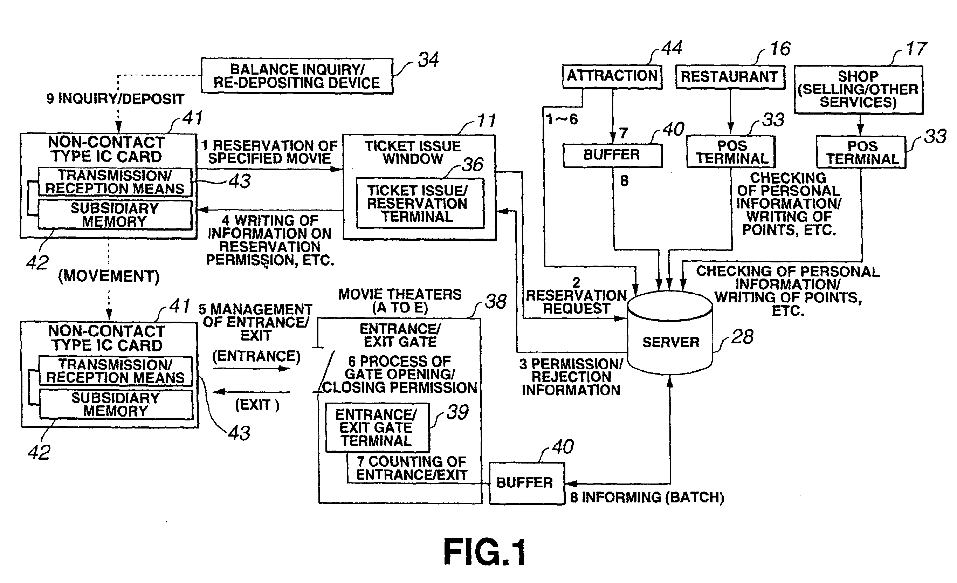

Among systems using the IC card 41 of the present invention in an event site, an admission reservation system of each of the movie theaters A to E will be described with reference to Fig. 1.

Fig. 1 shows a schematic structure of the admission reservation system and a process procedure 1 to 9. In the admission reservation system, the ticket issue/reservation terminal 36 in which the aforementioned IC card 41 can be used, the entrance/exit gate 38 installed in each of the movie theaters A to E, an entrance/exit gate terminal (an abbreviation of a terminal for entrance and exit) 39 for managing entrance and exit at the entrance/exit gate, the server 28 as a main control device, and a buffer 40 for temporarily storing data transmitted from the entrance/exit gate terminal 39 to the server 28.

### (About the server 28)

The server 28 as a main control device for managing the aforementioned IC card 41 is composed of an operation managing server 28a, a sales managing server 28b, a member managing server 28c, a printer 28d, etc. as shown in Fig. 3. The servers 28b, 28c incorporate at least an identification information processor for managing the aforementioned card identification information, a point information processor for managing the aforementioned point information per the identification information, a ticket type information processor for managing the aforementioned ticket type history information by managing the amount of money for issuing per a ticket type, a settlement of accounts information processor for managing the aforementioned settlement of accounts history information, an admission reservation information processor for managing the aforementioned admission reservation information, and so on, each of which manages and controls information corresponding to the subsidiary memory 42. The settlement of accounts information processor enables charging of the price from an account using a, so to speak, debit card as the settlement of accounts information processor calculates the amount of money that the specified person who possesses the IC card 41 has consumed, subtracts the amount from the amount of money recorded in the IC card 41, and records the balance in the IC card 41, and as the settlement of accounts information processor can directly charge the amount of money that the specified person who possesses the IC card 41 has consumed from a credit card or a bank account. The point information processor calculates the points that the specified person who possesses the IC card 41 has obtained and the points that the specified person has consumed, add or subtracts the points from the points recorded in the IC card 41, and records the remaining points in the IC card 41. When a reservation or a request is made from the ticket issue/reservation terminal 36 or the general client terminal 51, the admission reservation information processor compares admission reservation information managed with the content of the reservation or request, and decides whether the reservation is permitted or rejected to generate reservation permission/rejection information. When the admission reservation information processor permits the reservation, it sends the decision as reservation content information together with ticket type information from the ticket type information processor to the ticket issue/reservation terminal 36 or the general client terminal 51.

### (About a reservation device)

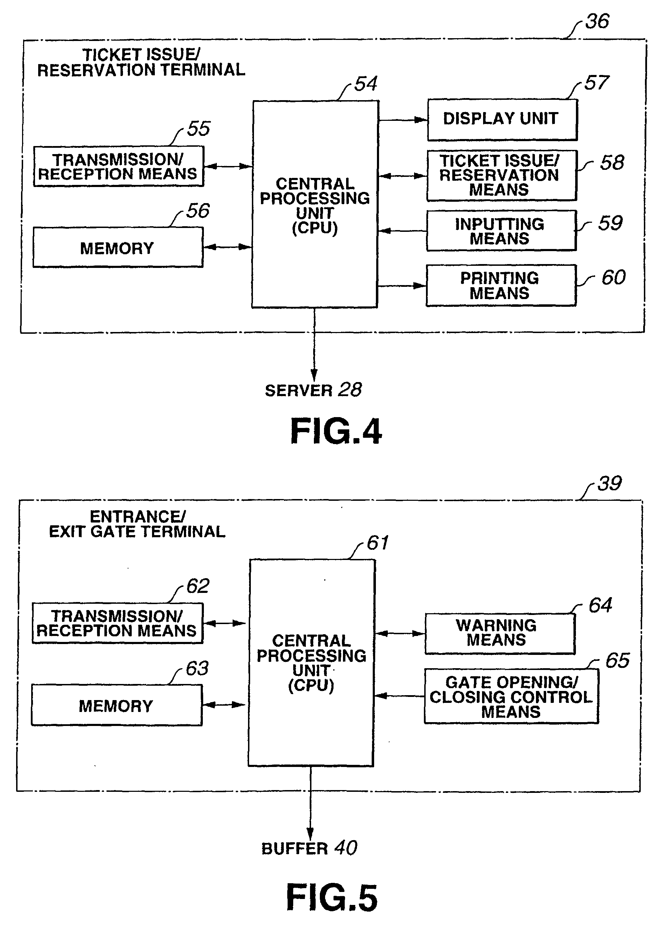

The ticket issue/reservation terminal 36 installed in the ticket issue window 11 comprises a central processing unit (CPU) 54 connected to the server 28 as a main control device, a transmission/reception means 55, a memory 56, a display unit 57, a ticket issue/reservation means 58, an inputting means 59, a printing means 60 and so on, as shown in a block diagram showing its schematic structure in Fig. 4. The transmission/reception means 55 transmits and receives data to and from the IC card 41, etc. The memory 56 has temporarily stored therein data from the IC card 41 or the server 28 and a program for processing the operation of the ticket issue/reservation terminal 36. The display unit 57 is a display means having a CRT, a liquid crystal display or the like for displaying the process operation in the ticket issue/reservation terminal 36. The ticket issue/reservation means 58 is a unit used when a reservation is made by using a card other than the IC card 41. The inputting means 59 is a keyboard, etc. The printing means 60 is a printer, etc. which prints out reserved information (theater code/work code/usage date/seat number, etc.) as needed to distribute it to the user.

### (About a gate device)

The entrance/exit gate terminal 39 installed in the entrance/exit gate 38 comprises a central processing unit (CPU) 61 connected to the server 28 as a main control device via the buffer 40, a transmission/reception means 62, a memory 63, a warning means 64, a gate opening/closing control means 65, and so on, as shown in a block diagram showing its schematic structure in Fig. 5. The transmission/reception means 62 transmits and receives data to and from the IC card 41, etc. in a non-contact manner. The memory 63 has temporarily stored therein data from the IC card 41 and a program for processing the operation of the entrance/exit gate terminal 39. When the reservation content information and so on of the IC card 41 detected in the transmission/reception means 62 is not valid, the warning means 64 warns the user who passes the entrance/exit gate 38 by a buzzer or the like. When it is determined via the transmission/reception means 62 that the user is one who possesses the IC card 41 that has been reserved validly, the gate opening/closing control means 65 permits the user to pass the entrance by opening the entrance/exit gate 38. It is noted that the permission to pass the entrance is determined by whether or not it is within the time period allocated to the reserved work, for example, and thus the re-admission is permitted as long as it is within the allocated time period. In a case where the user exits from the entrance/exit gate 38 to outside within the permitted time period, the information may be recorded in the memory 63 or in the IC card 41 by the transmission/reception means 62 of the entrance/exit gate terminal 39.

### (An admission system and an admission management system)

Next, the operation of the reservation and entrance/exit system configured as above will be described according to steps 1 to 9 showing the flow of the operation in Fig. 1.

### Steps 1, 9:

Firstly, a new user purchases an IC card 41 at the ticket issue machine 12 or the ticket issue window 11 to be a member. A user who is already a member and carries an IC card 41 with him or her goes to the balance inquiry/ re-depositing device 34 to check the amount of money and points, etc. that remain in the IC card 41. When the amount of money remains enough to be used, the user performs a reservation process. When it is not enough, the user deposits money and performs a reservation process. When the specified person who possesses the IC card 41 deposits money, the deposit history and the usage history and so on are overwritten in the subsidiary memory 42 in the IC card 41 via the transmission/reception means 43, 55. Also, the user can reserve up to 5 works at a time at the ticket issue window 11.

### Step 2:

When the necessary process is completed in step 1, the reservation or the request is sent from the ticket issue/reservation terminal 36 to the server 28 as a main control device. The server 28 determines whether or not the reservation is to be permitted by referring to admission reservation information managed in database.

### Step 3 to step 4:

When the server 28 as a main control device completes the determination, reservation permission/rejection information is sent to the ticket issue/reservation terminal 36. When the reservation is not permitted, it is informed to the ticket issue/reservation terminal 36. On the other hand, when the reservation is permitted, the permission of the reservation is sent as reservation content information together with theater code/work code/usage date/seat number and so on to the ticket issue/reservation terminal 36.

### Step 5:

On receiving the reservation content information, the ticket issue/reservation terminal 36 writes usage history and so on as well as the information on theater code/work code/usage date/seat number and so on, together with usage points, the amount of money used, and a method of charging, and issues a printed sheet on which the theater code/work code/usage date/seat number and so on have been printed to return it to the user. At this time, the reservation process by the user is completed, and the user goes to the movie theater reserved with the IC card 41.

### Step 6:

When the user who made a reservation goes to the entrance/exit gate 38 of the movie theater with the IC card 41, the IC card 41 responds to and receives at the transmission/reception means 43 a command transmitted from the transmission/reception means 62 in the entrance/exit gate terminal 39, and necessary information including the reservation data recorded in the subsidiary memory 41 is transmitted from the IC card 41 to the entrance/exit gate terminal 39. The entrance/exit gate terminal 39 determines whether the user is permitted to pass the entrance based on the reservation data, etc., and when the user is not permitted, the warning means 64 gives a warning by a buzzer or voice and rejects to open the entrance/exit gate 38. Thus, an invalid user who does not make a reservation is rejected to pass the entrance at the entrance/exit gate 38. On the other hand, when the user is a valid user who has made a reservation, the gate opening/closing control means 65 opens the entrance/exit gate 38 to permit the user to pass the entrance.

### Step 7:

When the user who possesses the valid IC card 41 passes through the entrance/exit gate 38, the reservation content information is read at the entrance/exit gate terminal 39. Also, in a case where the user passes the entrance once, exits within the reserved time, and passes the entrance again within the reserved time, the process is done in the same way, and these information is temporarily recorded in the buffer 40 and is not transmitted to the server 28 immediately. At this time, an operation sequence is completed from the reservation to the admission. The same process is done to each user who possesses his or her own IC card 41.

### Step 8:

The data on the people who have passed the entrance, etc. recorded in the buffer 40 is sent (informed) to the server 28 automatically when the ticket issue and reservation process by the ticket issue/reservation terminal 36 is completed, for example, during the night hours, the server 28 receives the information and performs data processing, that is, batch processing to reduce a load to the server 28 so that the processing of the server 28 may be sped up.

The above description is a case in which the user makes a reservation at the event site. Next, a case in which the user makes a reservation by using a communication network such as the Internet will be described. The user who is to use the Internet must get an IC card 41 in advance. The user can use the IC card 41 that the user has used before. The general client terminal 51 (refer to Fig. 3) must be able to read and write data from and on the IC card 41, and must be connected to the IC card reading/writing terminal 52 as a card reading/writing means connectable to the general client terminal 51. Also, a dedicated software for the IC card reading/writing terminal 52 must be prepared and installed in the general client terminal 51.

The user who uses the general client terminal 51 operates the general client terminal 51 to connect to the Internet via the ISP 53 and accesses to a website of the Web server 22. When the user makes a reservation operation according to a procedure commanded on the website, the dedicated software starts the operation and connects to the server 28. Then, identification information, etc. stored in the IC card 41 is sent to the server 28, and the reservation process is started. Reservation permission/rejection information, reservation content information, and so on during the process of the reservation are transmitted to the general client terminal 51 via the Web server 22, the Internet 21, and the ISP 53.

The general client terminal 51 controls the IC card reading/writing terminal 52 to record a variety of data including these reservation permission/rejection information, reservation content information, and so on in the subsidiary memory 42 in the IC card 41, and the reservation process is completed at this time. A method of the settlement of accounts at this time can be selected from charging the amount of money from a credit card or directly charging the amount of money from a bank account by using a debit card.

Although the above description is on the case of ticket issue and reservation for the movie theaters A to E, ticket issue and reservation for an attraction 44 is done by the same process. Although the attraction 44 in this description means a concert or an event at an entertainment hall other than a movie theater, the attraction 44 may be replaced by a reservation of a seat ticket for an airplane, a train, etc.

Next, a case in which the IC card 41 is used at a restaurant 16 and a shop 17 which provides selling and other services will be described. At each restaurant 16 and shop 17, a POS terminal 33 having a function of reading and writing data from and in the IC card 41 is installed. This POS terminal 33 performs a pre-paid settlement of accounts for a charge for meals or a charge for buying things by checking personal information recorded in the IC card 41, calculating the amount of money that the user (specified person) has consumed, subtracting the amount from the balance recorded in the IC card 41, and recording the subtracted balance in the IC card 41.

At the same time, the POS terminal 33 performs a settlement of a point use service by adding points that the user has obtained, and subtracting points that the user has consumed from the recorded points and recording the remaining points in the IC card 41 when the user uses the points recorded in the IC card 41. Meanwhile, although the POS terminal 33 is connected to the server 28 so that the process of the POS terminal 33 may be performed in real time in the present embodiment, the buffer 40 may be prepared to carry out batch processing as in a case of the movie theaters A to E or the attraction 44.

Thus, in the utilizing system of the IC card 41 configured as in the present invention, multi-functions of the IC card 41 can be used. Specifically, as the IC card 41 is used including the subsidiary memory 42 which records the card identification information, the settlement of accounts information, the reservation information, and the usage information so that they can be rewritten and the transmission/reception means 43 which operates in responsive to the external command to transmit/receive data to/from outside in a non-contact manner, and as the terminals 34, 35, 36, 39 are connected to the main control device 28 via the network 18 so that the main control device 28 can manage these terminals, advanced use of the IC card 41 in multiple ways for different service contents of, for example, the attraction 44, the shop 17, the restaurant 16, etc. scattered in a specified area can be realized. Thus, the settlement of accounts is simplified, and the user can be relieved from a troublesome problem of carrying plural cards with him or her. Also, the IC card 41 can treat a large amount of information since the subsidiary memory 42 records the card identification information, the settlement of accounts information, the reservation information, and the usage information so that they can be rewritten. Thus, data transmission/reception processing can be performed between the IC card 41 and each of the above-mentioned terminals in many cases without the IC card 41 accessing to the main control device such as the server 28. As a result, a load to the main control device can be reduced, and high-speed processing can be realized. Also, as the IC card 41 can have data rewritten therein so as to be used by the user a number of times, and can record a variety of data such as reservation information for a variety of tickets as well as information on the card identification information and the usage history information, the user can continuously receive beneficial services according to the usage history information such as a point service according to the use. Even when the IC card 41 is mistakenly lost or stolen, it can be processed as an invalid card. Thus, the user can take measures regarding security. When the user desires to reserve a variety of tickets, he or she does not have to go to a site or a reservation center, but can use the general client terminal 51 having a card reading/writing means, connect the terminal 51 to the server 28 as a sponsor side via the Internet at home, and receive the reservation service.

In this system of using the IC card 41, the subsidiary memory 42 records ID information of a specified person who must be permitted to enter a specified area and reservation content information, and the gate means is operated which permits or rejects the user to enter the specified area according to the reservation content information transmitted from the entrance/exit gate terminal 39 in response to a command transmitted from the IC card 41. Thus, when the specified person who possesses the IC card 41 just reaches the gate means side, the person is checked immediately whether or not he or she is a valid specified person, and an instruction of permission or rejection to passing the gate to the gate means. Accordingly, the examination process, etc. can be performed promptly and appropriately.

Further, the system of using the IC card has a buffer 40 between the entrance/exit gate terminal 39 and the main control device 28 for temporarily recording data from the entrance/exit gate terminal 39 and then transmitting the data to the main control device 28. So, the buffer 40 temporarily records processing data on the time when the reserved specified person enters the gate and the time when the person exits the gate obtained in the entrance/exit gate terminal 39 to reduce a processing load to the main control device 28.

### Industrial Applicability

As described above, with the information recording medium and the system of using the same according to the present invention, as the information recording medium can be used commonly in plural services including reservations scattered in a specified area, the reservation processes, the settlement of accounts processes, etc. in the plural services can be performed promptly and appropriately. More specifically, the present invention has great effects as the information recording medium can be used commonly in the services of attractions of vehicles, movies, restaurants, shops, and so on, and thus the reservation of tickets, etc., the examination procedure at the time of entrance and exit, the simplified and prompt settlement of accounts, the management of client services can be performed precisely.

## Claims

1. An information recording medium at least comprising:
an identification information recording area for recording identification information of the information recording medium;
a reservation information recording area for recording reservation information indicating that a specified resource is occupied for a specified time period previously; and
a usage information recording area for recording information relating to the settlement of accounts.

2. An information recording medium previously records identification information for enabling the identification of information recording medium, the information recording medium at least comprising:
a reservation information recording area that is able to record reservation information indicating that a specified resource is occupied for a specified time period previously; and
a usage information recording area that is able to record information relating to the settlement of accounts.

3. A utilizing system of an information recording medium **characterized by** comprising:
a terminal device connected to a network, for inputting/outputting to/from a reservation information recording area and a usage information recording area allocated to the information recording medium which previously records identification information for enabling the identification of the information recording medium, and at least has the reservation information recording area that is able to record the reservation information indicating that a specified resource is occupied for a specified time period and the usage information recording area that is able to record information relating to the settlement of accounts;
a main control device, connected to the network, for managing the reservation information indicating whether or not the specified resource and the specified time period are occupied for; and
a gate device being installed at the entrance of an area where the specified resource is usable, enabling to acquire the reservation content information recorded on the information recording medium, and performing opening/closing operations based on the reservation information, wherein
said terminal device inquires a status of reservation of the specified resource for the specified time period to the main control device, and when the specified resource desired to be occupied is available for the desired specified time period, the main control device records that the specified resource is occupied for the specified time period and informs information indicating the performed reservation to the terminal device, and the terminal device records the information indicating the performed reservation in the reservation information area of the information recording medium.

4. The utilizing system of an information recording medium according to claim 3, **characterized by** wherein
the terminal device includes a usage information reading unit for reading the usage information from the usage information recording area that the information recording medium records, and a balance inquiry unit for inquiring balance based on the usage information.

5. The utilizing system of an information recording medium according to claim 4, **characterized by** wherein
the terminal device further includes a balance updating unit for updating the balance.

6. The terminal device constituting the utilizing system of an information recording medium according to claim 3.

7. The main control device constituting the utilizing system of an information recording medium according to claim 3.

8. The gate device constituting the utilizing system of an information recording medium according to claim 3.

9. The terminal device constituting the utilizing system of an information recording medium according to claim 4.

10. The terminal device constituting the utilizing system of an information recording medium according to claim 5.

## Amended claims

### Amended claims under Art. 19.1 PCT

**1.** (Amended) A utilizing system of an information recording medium **characterized by** comprising:
a terminal device connected to a network, for inputting/outputting to/from a reservation information recording area and a usage information recording area allocated to the information recording medium which previously records identification information for enabling the identification of the information recording medium, and at least has the reservation information recording area that is able to record the reservation information indicating that a specified resource is occupied for a specified time period and the usage information recording area that is able to record information relating to the settlement of accounts;
a main control device, connected to the network, for managing the reservation information indicating whether or not the specified resource and the specified time period are occupied for; and
a gate device being installed at the entrance of an area where the specified resource is usable, enabling to acquire the reservation content information recorded on the information recording medium, and performing opening/closing operations based on the reservation information, wherein
said terminal device inquires a status of reservation of the specified resource for the specified time period to the main control device, and when the specified resource desired to be occupied is available for the desired specified time period, the main control device records that the specified resource is occupied for the specified time period and informs information indicating the performed reservation to the terminal device, and the terminal device records the information indicating the performed reservation in the reservation information area of the information recording medium.

**2.** (Amended) The utilizing system of an information recording medium according to claim 1, **characterized by** wherein the terminal device includes a usage information reading unit for reading the usage information from the usage information recording area that the information recording medium records, and a balance inquiry unit for inquiring balance based on the usage information.

**3.** (Amended) The utilizing system of an information recording medium according to claim 2, **characterized by** wherein the terminal device further includes a balance updating unit for updating the balance.

**4.** (Amended) In an information recording medium having previously recorded identification information, and at least has a reservation information recording area that is able to record reservation information indicating that a specified resource is occupied for a specified time period and a usage information recording area that is able to record information relating to the settlement of accounts; the information recording medium is used in a utilizing system comprising:
a terminal device connected to a network for inputting/outputting information to/from the reservation information recording area and the usage information recording area allocated in the information recording medium;
a main control device, connected to the network, for managing the reservation information indicating whether or not the specified resource and the specified time period are occupied for; and
a gate device being installed at the entrance of an area where the specified resource is usable, enabling to acquire the reservation content information recorded on the information recording medium, and performing opening/closing operations based on the reservation information, wherein
said terminal device inquires a status of reservation ofthe specified resource for the specified time period to the main control device, and when the specified resource desired to be occupied is available for the desired specified time period, the main control device records that the specified resource is occupied for the specified time period and informs information indicating the performed reservation to the terminal device, and the terminal device records the information indicating the performed reservation in the reservation information area of the information recording medium.

**5.** (Amended) In a gate device used in a utilizing system of an information recording medium, the system comprising:
a terminal device connected to a network, for inputting/outputting to/from a reservation information recording area and a usage information recording area allocated to the information recording medium which previously records identification information for enabling the identification of the information recording medium, and at least has the reservation information recording area that is able to record the reservation information indicating that a specified resource is occupied for a specified time period and the usage information recording area that is able to record information relating to the settlement of accounts; and
a main control device, connected to the network, for managing the reservation information indicating whether or not the specified resource and the specified time period are occupied for; wherein
said terminal device inquires a status of reservation of the specified resource for the specified time period to the main control device, and when the specified resource desired to be occupied is available for the desired specified time period, the main control device records that the specified resource is occupied for the specified time period and informs information indicating the performed reservation to the terminal device, and the terminal device records the information indicating the performed reservation in the reservation information area of the information recording medium, wherein
a gate device being installed at the entrance of an area where the specified resource is usable, enabling to acquire the reservation content information recorded on the information recording medium, and performing opening/closing operations based on the reservation information.

**6.** (Amended) The gate device according to claim 5, **characterized by** wherein
said terminal device includes a usage information reading unit for reading a usage information from the usage information recording area recorded in the information recording medium, and
a balance inquiry unit for inquiring balance based on the usage information.

**7.** (Amended) The gate device according to claim 6, **characterized by** wherein
the terminal device further includes a balance updating unit for updating the balance.

**8.** (Deleted)

**9.** (Deleted)

**10.** (Deleted)

Statement under Art. 19.1 PCT
Claims 1 to 7 have made it clear that a gate device acquires reservation content information from an information recording medium and performs permission for entering an area in which a specified resource is usable, and so the user who carries the information recording medium with him or her is checked at the entrance gate whether or not he or she is a valid specified person who has made a reservation such that the examination process and so on can be performed accurately and promptly.

Citation 1 (JP 07-108791 A) describes an invention on a prepaid card having a reservation function. More specifically, when a prepaid card is inserted in a desktop terminal installed at the entrance of each attraction hall, data such as a reservation number and date for the attraction, a balance, entrance/exit records, etc. recorded in the prepaid card are written and read. In a system of reserving attractions using this prepaid card, the desktop terminal installed in each attraction is connected via a network to a personal computer which manages data recorded in the prepaid card, and data regarding permission/rejection in receiving a reservation and a process of invalidating reservations on and after a predetermined reservation number and data regarding restriction on admission to each attraction are transmitted and received to read reservation information recorded in the prepaid card inserted in the desktop terminal and write a reservation number.

Citation 2 (JP 11-272761 A) describes an invention on a system of the settlement of accounts and so on. Specifically, this system of the settlement of accounts comprises a reservation/ticket issue center for managing reservations and issuing tickets based on a status of reservation of reserved tickets, etc., a reservation terminal for performing a reservation process in response to a reservation request using an IC card, and a ticket issue terminal for performing a ticket issue process in response to a ticket issue request using the IC card. In a case where a reservation of a reserved ticket, etc. is to be made, status of reservation retrieving information and a result of the retrieval are transmitted and received between the reservation terminal in which the IC card is inserted and the reservation/ticket issue center via a network, and reservation information is written in the IC card. Also, in a case where the reserved ticket is to be issued, the recorded reservation information, a notice of permitting ticket issue, charging information, etc. are transmitted and received among the ticket issue terminal in which the IC card having recorded therein the reservation information is inserted, the reservation/ticket issue center, and a credit center via the network, and the ticket is issued.

Citation 3 (JP 11-170750 A) describes an invention on a card having a memory device. Specifically, the invention relates to a card having a memory device which comprises a memory device enabling to have data written. The card has written therein client data such as the use limit amount issued mainly by a credit company and client data such as a balance issued by a financial institution, and functions as a credit card and a cash card. The client data is read from the card by a data reading device installed in a shop so that the user can receive products or services. Also, this card having a memory device functions as a ticket as ticket issue data of a purchased ticket is recorded in the card.

While the citations 1 to 3 describe as above, in the present invention, according to claims 1 to 7, a server for managing admission reservation information determines whether a reservation is permitted or rejected when the reservation for an event, etc. is requested from a ticket issue/reservation terminal or a general client terminal, and sends reservation permission/rejection information to the ticket issue/reservation terminal or the general client terminal. The ticket issue/reservation terminal or the general client terminal which has received the reservation permission/rejection information records reservation content information in an IC card. An entrance/exit gate is installed in a hall such as a movie theater. The entrance/exit gate receives the reservation content information from the IC card to determine whether of not the user is permitted to enter the hall, and rejects to open the gate if he or she is not permitted. Thus, it is possible to prevent an invalid user from entering the hall. Of the user is a valid reservoir, the gate is opened to permit him or her to enter the hall.

As described above, in the invention according to claims 1 to 7, in a case where it is determined to permit or reject the user to enter the hall, the entrance/exit gate transmits and receives data to and from the IC card only, and data. transmission/reception via a network is not performed. The permission/rejection to admission is determined by whether or not it is within the time allocated to a reserved work, for example, and when it is within the allocated time, re-admission is permitted. In a case where the user goes outside from the entrance/exit gate within the permitted time, the entrance/exit gate may record the information in a memory or in the IC card to manage entrance/exit information.
